# EUROPÄISCHE PATENTANMELDUNG

(11) **EP 0 881 529 A1**
(43) Veröffentlichungstag der Anmeldung: **02.12.1998**
(21) Anmeldenummer: 98107538.5
(22) Anmeldetag: 24.04.1998
(51) Int. Cl.: G03B 15/00, H04N 7/18, B64C 27/04, A63H 27/04

(54) **Unbemannter, ferngesteuerter Hubschrauber mit Kameras**

(30) Priorität: 22.05.1997 DE 19721363
(71) Anmelder: Schoenke, Uwe, 34613 Schwalmstadt-Frankenhain (DE)
(72) Erfinder: Schoenke, Uwe, 34613 Schwalmstadt-Frankenhain (DE)
(74) Vertreter: WALTHER, WALTHER & HINZ Patentanwälte

(57) **Zusammenfassung**

Gegenstand der Erfindung ist ein unbemannter, ferngesteuerter, eine Gesamtlänge von maximal 5m und einen Rotordurchmesser von maximal 3m aufweisender Hubschrauber (10), an dem eine fernsteuerbare Beobachtungskamera (18) angebracht ist. Einen Hubschrauber zu schaffen, der auch in entlegenen Winkeln und unübersichtlichen Stellen fliegen kann, wird dadurch erreicht, daß am Hubschrauber (10) eine Flugkamera (12) derart angebracht ist, daß sie in Flugrichtung freie Sicht hat, und daß der Hubschrauber (10) eine Sendestation zum sofortigen, drahtlosen Übersendung der von der Flugkamera (12) erfaßten Bilder zu einer Bodenstation umfaßt, so daß der Pilot den Hubschrauber (10) auch fliegen kann, ohne direkten Sichtkontakt zum Hubschrauber (10) zu haben.

## Beschreibung

Die vorliegende Erfindung betrifft einen unbemannten, ferngesteuerten, eine Gesamtlänge von maximal 5 m und einen Rotordurchmesser von maximal 3 m aufweisenden Hubschrauber, an dem eine fernsteuerbare Beobachtungskamera angebracht ist.

Derartige, mit einer Kamera ausgerüstete und ferngesteuerte Hubschrauber sind beispielsweise aus der Filmbranche bekannt. Hierbei werden die kleinen, sehr beweglichen Hubschrauber eingesetzt, um einzelne Spielszenen aus einem Blickwinkel aufzunehmen, den man ohne diesen Hubschrauber nur mit sehr viel technischem Aufwand erreichen würde. Außerdem kann der kleine und wendige Hubschrauber schnell und zielsicher von einer ersten in eine zweite Postion gebracht werden, so daß besonders effektvolle Aufnahmen entstehen.

Des Weiteren werden derartige Hubschrauber gerne zur Beobachtung bzw. Untersuchung schwer zugänglicher Stellen eingesetzt. Beispielsweise verwenden Architekten derartige Hubschrauber gerne, um schwer zugängliche Stellen von Gebäuden auf ihren Zustand hin zu untersuchen. Dies können beispielsweise Hochhäuser sein, deren Außenfassade überprüft werden muß oder auch (Kern-) Kraftwerke, die aufgrund ihrer Größe und Baugestaltung ansonsten nur mit teuren Leitern oder Gerüsten zugänglich sind.

Darüber hinaus werden derartige Hubschrauber auch bei der Überwachung von größeren Objekten eingesetzt, beispielsweise um festzustellen, ob bestimmte Türen oder Fenster verschlossen sind, zu denen man ansonsten nur auf Umwegen gelangt.

Bei all diesen Einsatzmöglichkeiten ist der Anwendungsbereich des Hubschraubers auf Situationen bzw. Örtlichkeiten beschränkt, bei denen der den Hubschrauber steuernde Pilot ständig Sichtkontakt zum Hubschrauber behält, damit er den Hubschrauber unfallfrei und sicher lenken kann.

Davon ausgehend liegt der vorliegenden Erfindung die Aufgabe zugrunde, einen unbemannten, ferngesteuerten Hubschrauber zu schaffen, der auch in entlegene Winkel und unübersichtliche Stellen fliegen kann.

Als technische Lösung dieser Aufgabe wird erfindungsgemäß vorgeschlagen, den eingangs genannten Hubschrauber dahingehend weiterzubilden, daß am Hubschrauber eine Flugkamera derart angebracht ist, daß sie in Flugrichtung freie Sicht hat und daß der Hubschrauber eine Sendestation zum sofortigen, drahtlosen Übersenden der von der Flugkamera erfaßten Bilder zu einer Bodenstation umfaßt, so daß der Pilot den Hubschrauber auch fliegen kann, ohne direkten Sichtkontakt zum Hubschrauber zu haben.

Ein nach dieser technischen Lehre ausgebildeter Hubschrauber hat den Vorteil, daß die Flugkamara quasi als Auge des Piloten fungiert und der Pilot sehen kann, wohin der Hubschrauber fliegt, ohne den Hubschrauber selbst sehen zu können. Damit wird der Pilot so gestellt, als wenn er selbst im Cockpit des Hubschraubers sitzt. Hierdurch ist es möglich, den Hubschrauber in vergleichsweise schmale Spalten oder in uneinsehbare Stellen zu fliegen und den Hubschrauber dennoch zuverlässig und sicher steuer zu können.

In einer bevorzugten Ausführungsform umfaßt der Hubschrauber eine zweite Sendestation zum sofortigen, drahtlosen Übersenden, der von der Beobachtungskamara erfaßten Aufnahmen zu einer Bodenstation. Hierdurch können die von der Beobachtungskamara gemachten Aufnahmen quasi online kontrolliert werden und es kann sofort entschieden werden, ob die aufgenommenen Bilder zufriedenstellend sind oder ob die Aufnahme wiederholt werden muß.

In einer anderen, bevorzugten Ausführungsform ist das Aufnahmeteil der Funk- und/oder Beobachtungskamara relativ zum Hubschrauber bewegbar gelagert, wobei das jeweilige Aufnahmeteil jeweils über eine separate Fernsteuerung nach rechts, links, oben oder unten bewegbar ist. Hierdurch ist es möglich, die Kamara unabhängig vom Hubschrauber zu bewegen, um das gewünschte Objekt optimal zu erfassen. Durch die separate Fernsteuerung der Beobachtungskamara ist es auch möglich, daß diese Beobachtungskamara von einer zweiten Person überwacht und gesteuert wird, während der Pilot den Hubschrauber in Position bringt oder hält. Hierdurch wird eine optimale Aufnahme des gewünschten Objektes erreicht.

In einer anderen, bevorzugten Ausführungsform sind die Funk- und/oder die Beobachtungskamara in Plexiglasgehäusen gehalten, die vorzugsweise kugel- oder stromlinienförmig ausgebildet sind. Durch die Unterbringung der jeweiligen Kamara im Plexiglasgehäuse ist die Kamara vor Wittungseinflüssen geschützt, so daß der Hubschrauber auch bei Regen oder Schnee einsetzbar ist. Die kugel- oder stromlinienförmige Ausgestaltung des Plexiglasgehäuses hat weiterhin den Vorteil, daß hierbei keine Kanten vorhanden sind, die die durch die Kamara gemachte Aufnahme beeinträchtigen. Außerdem ist hierbei gewährleistet, daß der Luftwiderstand des Hubschraubers gering gehalten wird, so daß dieser wie gewohnt fliegt.

In noch einer anderen, bevorzugten Ausführungsform sind die Funk- und/oder die Beobachtungskamara über mehrere, vorzugsweise acht Gummibänder am Hubschrauber, vorzugsweise in dem Plexiglasgehäuse gehalten. Diese von der Kamara in alle Raumrichtungen ausgehenden Gummibänder halten die jeweilige Kamara in einer genau definierten Position und absorbieren gleichzeitig die vom Antrieb des Hubschraubers verursachten Vibrationen, so daß die Kamara nahezu wackelfreie Bilder aufnehmen kann.

Das gleiche Ziel kann dadurch erreicht werden, daß die Funk- und/oder die Beobachtungskamara in Schaumstoff eingebettet sind und zusammen mit diesem am Hubschrauber, insbesondere in dem Plexiglasgehäuse gehalten sind.

Um die Baugröße der Funk- und/oder der Beobachtungskamara gering zu halten und um optimale, digitale Bilder zu erreichen, wird in einer bevorzugten Ausführungsform eine Platinen- oder eine Chipkamara eingesetzt.

In einer bevorzugten Weiterbildung des erfindungsgemäßen Hubschraubers ist in diesem ein Notfallschirm integriert, der sich öffnet, sobald der Hubschrauber abstürzt. Hierdurch sollen die teuren Kamaras und der teure Hubschrauber vor größeren Beschädigung bewahrt werden, falls der Hubschrauber einmal abstürzen sollte. Außerdem soll verhindert werden, daß der herabfallende Hubschrauber Personen verletzt.

In einer anderen, bevorzugten Weiterbildung weisen die Funk- und/oder die Beobachtungskamara ein fernsteuerbares Zoomobjektiv auf. Hierdurch können wahlweise detaillierte Aufnahmen oder Aufnahmen mit einem großen Erfassungswinkel durchgeführt werden, so daß sich die Einsatzmöglichkeiten des Hubschraubers erhöhen.

Zur Steuerung des Hubschraubers und zur Auswertung der aufgenommenen Bilder wird eine Bodenstation, beispielsweise in einem Kleintransporter, eingerichtet, die die vom Hubschrauber ausgesandten Bilder empfangen kann und die zwei unabhängige Empfangs-stationen und zwei daran angeschlossene Bildschirme zum Empfang und zur sofortigen Sichtbarmachung, sowohl der von der Funkkamara, als auch der von der Beobachtungskamara erfaßten Bilder aufweist. In einer vorteil-haften Ausgestaltung umfaßt die Bodenstation ein oder zwei Aufzeichnungsgeräte zur Aufzeichnung der von der Beobachtungskamara erfaßten Bilder.

Mit dieser Bodenstation ist es möglich, daß zwei Personen gleichzeitig den Hubschrauber bedienen. Dabei steuert eine Person über eine Fernbedienung den Hubschrauber und überwacht den Flug des Hubschraubers über den ersten, der Flugkamara angeschlossenen Monitor, während die zweite Person die Beobachtungskamara bedient und über den der Beobachtungskamara angeschlossenen Monitor die aufgenommenen Bilder sofort kontrolliert. Hierdurch kann die zweite Person den Pilot Anweisungen geben, in Abhängigkeit der Auswertung der erfaßten Bilder an der Stelle zu verharren oder in eine bestimmte andere Position zu fliegen. Eine dritte Person kann das Fahrzeug fahren, so daß der Hubschrauber auch aus dem fahrenden Fahrzeug heraus bedient und gesteuert werden kann.

Weitere Vorteile des erfindungsgemäßen Hubschraubers ergeben sich aus der Beschreibung und aus der beigefügten Zeichnung. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. In der Zeichnung ist ein Ausführungsbeispiel eines erfindungsgemäßen Hubschraubers dargestellt, anhand dessen die Erfindung näher erläutert wird. Es zeigen:
- Fig. 1: eine Seitenansicht eines erfindungsgemäßen Hubschraubers in schematischer Darstellung;
- Fig. 2: eine vergrößerte Darstellung der in der Glaskugel gehaltenen Beobachtungskamara.

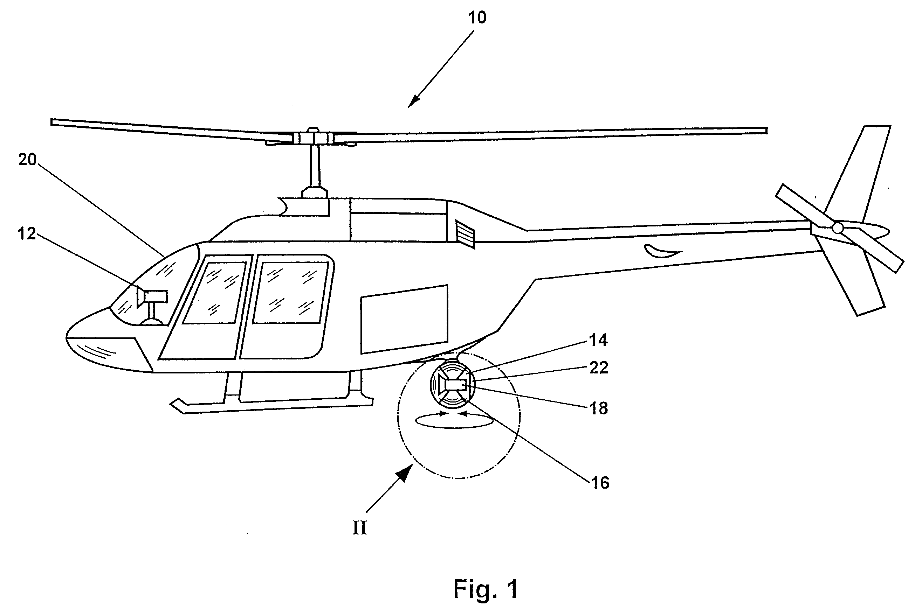

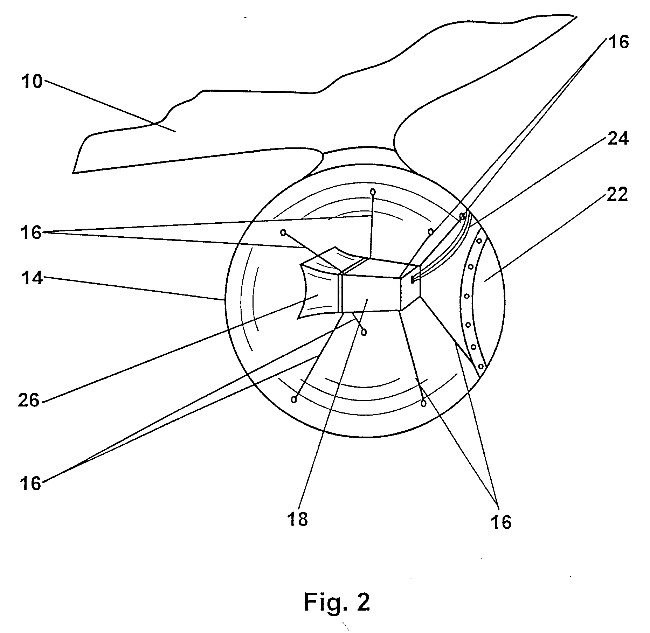

In den Figuren 1 und 2 ist ein Ausführungsbeispiel eines erfindungsgemäßen Hubschraubers 10 dargestellt, in dessen vorderen Bereich eine Flugkamara 12 integriert ist. An der Unterseite des Hubschraubers 10 ist eine Plexiglaskugel 14 angehängt, in der über Gummibänder 16 eine Beobachtungskamara 18 gehalten ist.

Die Flugkamara 12 kann wahlweise ins Innere des Hubschraubers 10 und dort unmittelbar hinter die Windschutzscheibe 20 montiert werden oder aber analog zur Beobachtungskamara 18 ebenfalls in eine an der Unterseite des Hubschraubers 10 befestigte Plexiglaskugel integriert werden.

Wie Figur 2 zu entnehmen ist, ist die Beobachtungskamara 18 über acht Gummibänder in der Mitte der Plexiglaskugel 14 gehalten, wobei die Erschütterungen und Vibrationen des Hubschraubers, insbesondere des Motors, weitgehend von den Gummibändern 16 aufgefangen werden.

Der Beobachtungskamera ist ein Aufnahmeteil 26 mit Objektiv und Aufnahmechip vorgeschaltet, an dem keine der Gummibänder angreifen. Die Aufnahmeteil 26 kann über separate Lagerungen und Stellmotoren Schwenk- und/oder Nickbewegungen ausführen, so daß das Aufnahmeteil 26 nach rechts, links, oben oder unten bewegt werden kann, ohne daß der Hubschrauber 10 seine Position verändert. Das Aufnahmeteil 26 ist über eine separate Fernbedienung steuerbar.

An der Rückseite der Plexiglaskugel 14 ist ein abnehmbarer Deckel 22 angeschraubt, der die Montageöffnung der Plexiglaskugel 14 verschließt. Oberhalb des Deckels 22 sind in der Plexiglaskugel 14 einige Versorgungsanschlüsse integriert, die im Inneren der Plexiglaskugel 14 über Kabel mit der Beobachtungskamara 18 verbunden sind. Diese Versorgungsanschlüsse 24 sind nach dem sogenannten "quick-out" System ausgelegt.

Es hat sich herausgestellt, daß ein Hubschrauber 10 mit einer Gesamtlänge von ca. 2,5 m und einem Rotordurchmesser von ca. 1,5 m ausreichend ist, um die jeweils ca. 200 g schweren Kamaras 12, 18 und die zum Betrieb der Kamara notwendigen Akkus mit einem Gewicht von jeweils 200 g zu Tragen. In dieser Ausführungsform hat der gesamte Hubschrauber 10 ein Gewicht von ca. 5 - 6 kg und eine Reichweite von ca. 1000 m, bei einer Flugdauer von ca. 1 Stunde. Dabei erreicht der Hubschrauber Spitzengeschwindigkeiten von bis zu 100 km/h.

Sowohl die von der Flugkamara 12, als auch die von der Beobachtungskamara 18 erfaßten Bilder werden online umgehend über entsprechende Funksender an eine hier nicht dargestellte Bodenstation übertragen. In dieser Bodenstation sind für die Flugkamara 12 und die Beobachtungskamara 18 jeweils separate Empfangsstationen und Antennen vorhanden, die selbst Bilder von einem mehrere Kilomenter entfernten Hubschrauber 10 empfangen können. Die von der Bodenstation empfangenen Bilder werden umgehend über im Inneren der Bodenstation angebrachte Monitore getrennt sichtbar gemacht. In der Bodenstation ist ein Arbeitsplatz für den Piloten und ein zweiter Arbeitsplatz für den Kamaramann vorbereitet. Der Pilot beobachtet über den Monitor, wohin der Hubschrauber fliegt und kann über eine entsprechende, einen Joystick aufweisende Fernbedienung den Hubschrauber in der gewünschten Weise lenken. Diese Fernbedienung ist über "Quick-Out" Anschlüsse an der Bodenstation angeschlossen und kann schnell und einfach herausgenommen werden, so daß der Pilot die Bodenstation verlassen kann und den Hubschrauber per Sichtflug weiterfliegen kann.

Der Kamaramann beobachtet über die Beobachtungskamara 18 das zu untersuchende Objekt und kann über seine eigene Fernsteuerung das Aufnahmeteil 26 der Beobachtungskamara 18 nach rechts oder links drehen oder diese nach oben oder unten schwenken. Durch die Online-Übertragung der Bilder kann der Kamaramann sofort entscheiden, ob der Hubschrauber an dieser Position verharren soll und/oder in welche Richtung der Hubschrauber fliegen soll und kann den Piloten entsprechende Anweisungen geben.

In einer anderen Ausführungsform ist die Bodenstation in einem Fahrzeug, beispielsweise einem Kleintransporter, untergebracht. Dabei ist es auch möglich, den Hubschrauber aus der fahrenden Bodenstation heraus zu bedienen und zu steuern.

### Bezugszeichenliste:

- 10: Hubschrauber
- 12: Flugkamara
- 14: Plexiglaskugel
- 16: Gummibänder
- 18: Beobachtungskamara
- 20: Windschutzscheibe
- 22: Deckel
- 24: Versorgungsanschlüsse
- 26: Aufnahmeteil

## Patentansprüche

1. Unbemannter, ferngesteuerter, eine Gesamtlänge von maximal 5 m und einen Rotordurchmesser von maximal 3 m aufweisender Hubschrauber (10), an dem eine fernsteuerbare Beobachtungskamera (18) angebracht ist,
**dadurch gekennzeichnet**,
daß am Hubschrauber (10) eine Flugkamera (12) derart angebracht ist, daß sie in Flugrichtung freie Sicht hat, und daß der Hubschrauber (10) eine Sendestation zum sofortigen, drahtlosen Übersenden der von der Flugkamera (12) erfaßten Bilder zu einer Bodenstation umfaßt, so daß der Pilot den Hubschrauber (10) auch fliegen kann, ohne direkten Sichtkontakt zum Hubschrauber (10) zu haben.

2. Hubschrauber nach Anspruch 1,
**dadurch gekennzeichnet**,
daß der Hubschrauber (10) eine zweite Sendestation zum sofortigen, drahtlosen Übersenden der von der Beobachtungskamera (18) erfaßten Aufnahmen zu einer Bodenstation umfaßt.

3. Hubschrauber nach wenigstens einem der vorherigen Ansprüche,
**dadurch gekennzeichnet**,
daß das Aufnahmeteil (26) der Funk- (12) oder/und der Beobachtungskamera (18) relativ zum Hubschrauber (10) bewegbar gelagert ist, wobei das Aufahmeteil (26) der Funk- (12) oder/und der Beobachtungskamera (18) jeweils über eine separate Fernsteuerung nach rechts, links, oben oder unten bewegbar ist.

4. Hubschrauber nach wenigstens einem der vorherigen Ansprüche,
**dadurch gekennzeichnet**,
daß die Funk- (12) oder/und die Beobachtungskamera (18) in einem am Hubschrauber (10) befestigten Plexiglasgehäuse (14) gehalten ist.

5. Hubschrauber nach Anspruch 4,
**dadurch gekennzeichnet**,
daß das Plexiglasgehäuse (14) kugel- oder stromlinienförmig ausgebildet ist.

6. Hubschrauber nach wenigstens einem der vorherigen Ansprüche,
**dadurch gekennzeichnet**,
daß die Funk- (12) oder/oder die Beobachtungskamera (18) über mehrere, inbsbesondere acht, Gummibänder (16) am Hubschrauber (10), insbesondere in dem Plexiglasgehäuse (14), gehalten ist.

7. Hubschrauber nach wenigstens einem der vorherigen Ansprüche,
**dadurch gekennzeichnet**,
daß die Funk- (12) oder/und die Beobachtungskamera (18) in Schaumstoff eingebettet ist und zusammen mit diesem am Hubschrauber (10), insbesondere in dem Plexiglasgehäuse (14), gehalten ist.

8. Hubschrauber nach wenigstens einem der vorherigen Ansprüche,
**dadurch gekennzeichnet**,
daß die Funk- (12) oder/und die Beobachtungskamera (18) eine Platinen- oder eine Chipkamera ist.

9. Hubschrauber nach wenigstens einem der vorherigen Ansprüche,
**gekennzeichnet durch**
durch einen Notfallschirm.

10. Hubschrauber nach wenigstens einem der vorherigen Ansprüche,
**dadurch gekennzeichnet**,
daß die Funk- (12) oder/und die Beobachtungskamera (18) ein fernsteuerbares Zoomobjektiv aufweist.

11. Bodenstation zum Empfang der von dem Hubschrauber nach wenigstens einem der vorherigen Ansprüche drahtlos übersandten Bilder,
**gekennzeichnet durch**
zwei unabhängige Emfangsstationen und zwei daran angeschlossene Bildschirme zum Empfang und zur sofortigen Sichtbarmachung, sowohl der von der Funkkamera (12), als auch der von der Beobachtungskamera (18) erfaßten Bilder.

12. Bodenstation nach Anspruch 11,
**gekennzeichnet durch**
ein oder zwei Aufzeichnungsgerät(e) zur Aufzeichnung der von der Beobachtungskamera (18) erfaßten Bilder.

13. Bodenstation nach wenigstens einem der Ansprüche 11 bis 12,
**dadurch gekennzeichnet**,
daß die Bodenstation in einem Fahrzeug untergebracht ist.

14. Bodenstation nach Anspruch 13,
**dadurch gekennzeichnet**,
daß die Bodenstation auch während der Fahrt einsetzbar ist.
